# Europäisches Patentamt
# European Patent Office
# Office européen des brevets

(19)

(11) Veröffentlichungsnummer: **0 176 779**
**B1**

(12) # EUROPÄISCHE PATENTSCHRIFT

(45) Veröffentlichungstag der Patentschrift:
**10.05.89**

(21) Anmeldenummer: **85110972.8**

(22) Anmeldetag: **30.08.85**

(51) Int. Cl.⁴: **H 05 B 39/08,** H 02 M 5/257

(54) Schaltanordnung mit 2-Leiteranschluss.

(30) Priorität: **13.09.84 DE 3433651**

(43) Veröffentlichungstag der Anmeldung:
**09.04.86 Patentblatt 86/15**

(45) Bekanntmachung des Hinweises auf die Patenterteilung:
**10.05.89 Patentblatt 89/19**

(84) Benannte Vertragsstaaten:
**AT BE CH DE FR GB IT LI NL SE**

(56) Entgegenhaltungen:
**FR-A-2 409 657**

(73) Patentinhaber: **Siemens Aktiengesellschaft Berlin und München, Wittelsbacherplatz 2, D-8000 München 2 (DE)**

(72) Erfinder: **Ott, Hans, Brunnstrasse 33, D-8400 Regensburg (DE)**
Erfinder: **Stieglbauer, Walter, Dr.- Winterling-Strasse 7, D-8374 Viechtach (DE)**

EP 0 176 779 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft eine Schaltanordnung mit zwei Anschlußklemmen, für einen Außenleiter des Netzes und für eine Verbindungsleitung zum Verbraucher, wobei ein elektrischer Schalter die Anschlußklemmen überbrückt, der durch Elektronikglieder angesteuert wird, die mit Stromrichterschaltungen verbunden sind.

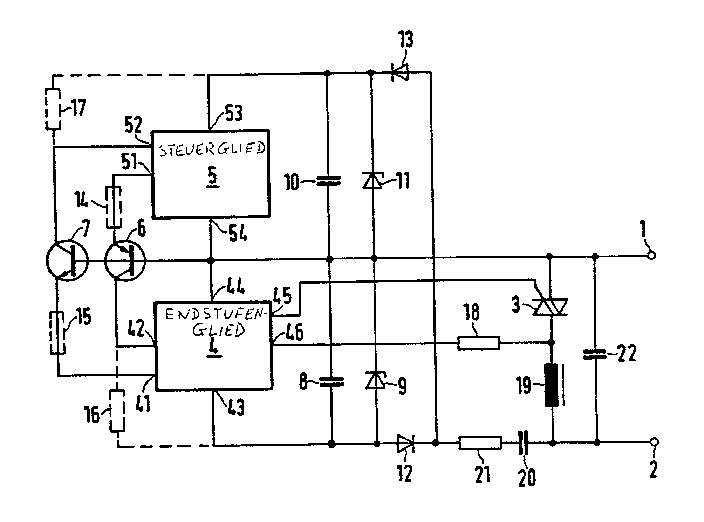

Derartige Schaltanordnungen mit zwei Anschlußklemmen sind bekannt (Integrierte Schaltungen für industrielle Anwendungen, Datenbuch 1982/83, Siemens AG, Seite 383, Bild 3). Dabei wird ein elektrischer Schalter durch ein Steuerglied angesteuert. Für den benötigten Gleichstrom reicht es dabei aus, wenn durch einen Stromrichter nur eine Netzhalbwelle gleichgerichtet wird. Während der zweiten Netzhalbwelle wird ein Vorschaltkondensator entladen. Dessen Entladestrom bleibt ungenutzt und trägt zur Verlustleistung bei.

Wenn das Steuerglied durch weitere Elektronik ergänzt werden soll, beispielsweise wenn ein Dimmer mit einer Fernsteuerung gekoppelt werden soll, steigt der Gleichstrombedarf. Bei einer Vergrößerung des Stromrichters und sonach auch seiner Vorschaltkapazität stiege jedoch auch die Verlustleistung am Schutzwiderstand des Stromrichters proportional zur entnommenen Gleichstromleistung an. Außerdem erhöhte sich der Raumbedarf zur Unterbringung der Bauteile des Stromrichters. Schaltergehäuse möchte man jedoch möglichst klein halten.

Der Erfindung liegt die Aufgabe zugrunde, eine elektronische Schaltanordnung mit 2-Leiteranschluß zu entwickeln, die bei geringer Verlustleistung die Bauteile für den Gleichstrombedarf für eine leistungsstarke Elektronik in einem kleinen Raum unterzubringen gestattet.

Die Aufgabe wird erfindungsgemäß dadurch gelöst,
- daß der elektrische Schalter durch ein Endstufenglied angesteuert wird, dessen erster Anschluß über eine erste Stromrichterschaltung mit den beiden Anschlußklemmen in Verbindung steht, die die negative Halbwelle der Netzspannung gleichrichtet,
- daß das Endstufenglied mit einem Steuerglied in Verbindung steht, dessen erster Anschluß über eine zweite Stromrichterschaltung mit den beiden Anschlußklemmen in Verbindung steht, die die positive Halbwelle der Netzspannung gleichrichtet und
- daß die zweiten Anschlüsse des Endstufengliedes und des Steuergliedes mit der Anschlußklemme des Außenleiters als Bezugspotential direkt verbunden sind.

Die elektronische Schaltanordnung mit 2-Leiteranschluß nach der Erfindung erzeugt - im Vergleich zu bekannten Einrichtungen bei gleichbleibender Verlustleistung eine doppelt so große Gleichstromleistung. Dabei wird auch der Entladungsstrom des Vorschaltkondensators zur Gleichrichtung benutzt. Die Versorgung weiterer elektronischer Schaltungseinrichtungen, wie Fernsteuerempfänger, kann dadurch gesichert werden. Der zusätzliche Raumbedarf im Schaltergehäuse für die Versorgung eines Fernsteuerempfängers ist nach der Erfindung gering.

Die Netzspannung wird zur Erzeugung von Gleichstrom für die Elektronik effektiver ausgenützt, indem beide Halbwellen der Netzspannung genutzt werden.

Nach einer Ausgestaltung der Erfindung weist die erste Stromrichterschaltung zwischen der Anschlußklemme für den Verbraucher und dem Endstufenglied eine erste Diode und zwischen Außenleiter und Endstufenglied einen ersten Speicherkondensator auf, die die negative Halbwelle der Netzspannung glätten. Die zweite Stromrichterschaltung weist zwischen der Verbraucherklemme und dem Steuerglied eine zweite Diode und zwischen Außenleiter und Steuerglied einen zweiten Speicherkondensator auf, die die positive Halbwelle der Netzspannung glätten. Am ersten Anschluß des Endstufengliedes liegt dann ein zum Bezugspotential am zweiten Anschluß negatives Potential und am ersten Anschluß des Steuergliedes liegt ein zum Bezugspotential am zweiten Anschluß positives Potential an.

Nach einer Ausgestaltung sind parallel zu den Speicherkondensatoren Zenerdioden angeordnet, die die Spannung an den Kondensatoren begrenzen.

Nach einer Weiterbildung der Erfindung sind Endstufenglied und Steuerglied durch eine Transistorkopplung miteinander verbunden. Dabei ist ein Ausgang des Steuergliedes über einen ersten Transistor in Basis-Schaltung mit einem Eingang des Endstufengliedes verbunden und ein Ausgang des Endstufengliedes steht über einen zweiten Transistor in Basis-Schaltung mit einem Eingang des Steuergliedes in Verbindung. Die Basen der beiden Transistoren liegen am Bezugspotential. Diese Kopplung der Elektronikglieder über Transistoren hat den Vorteil, daß keine Schutzelemente benötigt werden, um Überspannungen an der Elektronik zu vermeiden. Mit der Transistorkopplung ist es auch möglich, Steuerglied und Endstufenglied bei unterschiedlichem Potential zu betreiben.

Nach einer weiteren Ausgestaltung kann der elektrische Schalter, der die Anschlußklemmen überbrückt, ein Triac sein, mit dessen Gate ein Steuerausgang des Endstufengliedes in Verbindung steht.

Die Erfindung soll anhand eines in der Zeichnung grob schematisch wiedergegebenen Ausführungsbeispiels näher erläutert werden:

Die Zeichnung zeigt das Schaltbild einer erfindungsgemäßen Schaltanordnung.

Die elektronische Schaltanordnung nach der Erfindung zum ferngesteuerten Schalten eines Dimmers kommt mit zwei Anschlußklemmen 1 und 2 aus. An die erste Anschlußklemme 1 wird ein Außenleiter der Hausinstallation angeschlossen. Die zweite Anschlußklemme 2 nimmt eine Verbindungsleitung zum Verbraucher, beispielsweise einer Lampe auf. Eine Verbindung mit einem Mittelpunktleiter ist nicht vorgesehen, so daß die Schaltanordnung in Einbaudosen mit 2-Leiteranschluß, wie sie in Altbauten üblich sind, eingesetzt werden kann. Die Anschlußklemmen 1 und 2 überbrückt als elektrischer Schalter 3 ein Triac. Mit dem Gate des Triacs ist ein Endstufenglied 4 an seinem Steuerausgang 45 verbunden. Dieses Endstufenglied 4 enthält eine Phasenanschnittsteuerung, die die Helligkeit einer Lampe auf bekannte Weise dimmen kann. Zur Fernsteuerung eines solchen Dimmers bedarf es eines Steuergliedes 5, das einen Fernsteuerempfänger enthält. Das Steuerglied 5 ist mit dem Endstufenglied 4 durch eine Transistorkopplung verbunden. Ein Ausgang 51 des Steuergliedes 5 ist dazu über einen ersten Transistor 6 in Basis-Schaltung mit einem Eingang 42 des Endstufengliedes 4 verbunden. Entsprechend ist ein Ausgang 41 des Endstufengliedes 4 über einen zweiten Transistor 7 in Basis-Schaltung mit einem Eingang 52 des Steuergliedes 5 verbunden. Die Basen der Transistoren 6 und 7 stehen mit der Anschlußklemme 1 und sonach mit dem Netz in Verbindung.

Die Versorgung des Endstufengliedes 4 und des Steuergliedes 5 mit Gleichspannung wird durch den Einsatz von Kondensatornetzteilen als Stromrichterschaltungen gewährleistet. Der erste Anschluß 43 des Endstufengliedes 4 steht mit den Anschlußklemmen 1 und 2 des Außenleiters und des Verbrauchers über eine negative Stromrichterschaltung, die nur die negative Halbwelle der Netzspannung gleichrichtet, in Verbindung. Diese weist eine erste Diode 12 auf, die in Serie mit einem Vorschaltkondensator 20 und einem ohmschen Schutzwiderstand 21 an ihrer Kathode mit der Anschlußklemme 2 in Verbindung steht, sowie eine Parallelschaltung aus einem ersten Speicherkondensator 8 und einer ersten Zenerdiode 9, die mit der Anschlußklemme 1 verbunden sind. Der erste Anschluß 53 des Steuergliedes 5 steht mit den Anschlußklemmen 1 und 2 nach der Erfindung über eine positive Stromrichterschaltung, die nur die positive Halbwelle der Netzspannung gleichrichtet, in Verbindung. Diese weist eine zweite Diode 13 auf, die in Serie mit dem Vorschaltkondensator 20 und dem ohmschen Schutzwiderstand 21 an ihrer Anode mit der Anschlußklemme 2 in Verbindung steht, sowie eine Parallelschaltung aus einem zweiten Speicherkondensator 10 und einer zweiten Zenerdiode 11, die mit der Anschlußklemme 1 verbunden sind. Die zweiten Anschlüsse 44 und 54 des Endstufengliedes 4 und des Steuergliedes 5 sind direkt mit der Anschlußklemme 1 des Außenleiters verbunden. Das Netzpotential dient sonach als Bezugspotential.

Bei der Schaltanordnung nach der Erfindung werden zur Versorgung des Endstufengliedes 4 und des Steuergliedes 5 mit Gleichspannung statt nur eine Halbwelle beide Halbwellen der Netzspannung genutzt und es entstehen eine positive und eine negative Gleichspannungsquelle.

Wenn die Ausgänge 41 und 51 des Endstufengliedes 4 und des Steuergliedes 5 nicht als Stromquellen ausgebildet sind, können den Emittern der Transistoren 6 und 7 ohmsche Widerstände 14 und 15 vorgeschaltet werden. Wenn die Eingänge 42 und 52 des Endstufengliedes 4 und des Steuergliedes 5 eine interne Schwellenspannung nicht aufweisen, können sie mit den jeweils zugeordneten Stromrichterschaltungen über ohmsche Widerstände 16 und 17 zur Erzeugung einer Grundschwelle verbunden werden.

Mit der Anschlußklemme 2 für den Verbraucher steht ein Synchronisationsausgang 46 des Endstufengliedes 4 über einen ohmschen Widerstand 18 in Verbindung. Dadurch wird eine Phasenverschiebung zwischen der Spannung an Klemme 1 und der Spannung an Klemme 2 verhindert. Eine Drosselspule 19 soll den Verbraucher an der Anschlußklemme 2 schützen. Zur Funkentstörung ist ein weiterer Kondensator 22 parallel zum Triac angeordnet.

## Liste der Bezugszeichen

1  Anschlußklemme für Außenleiter
2  Anschlußklemme für Verbindungsleitung zum Verbraucher
3  elektrischer Schalter
4  Endstufenglied mit Phasenanschnittsteuerung
5  Steuerglied mit Fernsteuerempfänger
6  Transistor der Transistorkopplung von Steuerglied mit Endstufenglied
7  Transistor der Transistorkopplung von Endstufenglied mit Steuerglied
8  Speicherkondensator der negativen Stromrichterschaltung
9  Zenerdiode der negativen Stromrichterschaltung
10 Speicherkondensator der positiven Stromrichterschaltung
11 Zenerdiode der positiven Stromrichterschaltung
12 Diode der negativen Stromrichterschaltung
13 Diode der positiven Stromrichterschaltung
14 ohmscher Vorschaltwiderstand des ersten Transistors
15 ohmscher Vorschaltwiderstand des zweiten Transistors
16 ohmscher Widerstand zur Erzeugung einer Grundschwelle am Eingang des Endstufengliedes
17 ohmscher Widerstand zur Erzeugung einer Grundschwelle am Eingang des Steuergliedes
18 ohmscher Widerstand in der Synchronisationsleitung 19 Drosselspule
20 Vorschaltkondensator
21 ohmscher Schutzwiderstand
22 Kondensator zur Funkentstörung
41 Ausgang des Endstufengliedes
42 Eingang des Endstufengliedes
43 Anschluß des Endstufengliedes für die negative Spannungsquelle
44 Anschluß des Endstufengliedes für das Bezugspotential
45 Steuerausgang des Endstufengliedes
46 Synchronisationsausgang des Endstufengliedes
51 Ausgang des Steuergliedes
52 Eingang des Steuergliedes
53 Anschluß des Steuergliedes für die positive Spannungsquelle
54 Anschluß des Steuergliedes für das Bezugspotential

**Patentansprüche**

1. Schaltanordnung mit einer ersten Anschlußklemme (1) für einen Außenleiter des Netzes und einer zweiten Anschlußklemme (2) für eine Verbindungsleitung zum Verbraucher, wobei ein elektrischer Schalter (3) die beiden Anschlußklemmen (1 und 2) überbrückt, der durch Elektronikglieder (4, 5) angesteuert wird, die mit Stromrichterschaltungen verbunden sind, dadurch gekennzeichnet,
- daß der elektrische Schalter (3) durch ein Endstufenglied (4) angesteuert wird, dessen erster Anschluß (43) über eine erste Stromrichterschaltung mit den beiden Anschlußklemmen (1, 2) in Verbindung steht, die die negative Halbwelle der Netzspannung gleichrichtet,
- daß das Endstufenglied (4) mit einem Steuerglied (5) in Verbindung steht, dessen erster Anschluß (53) über eine zweiten Stromrichterschaltung mit den beiden Anschlußklemmen (1, 2) in Verbindung steht, die die positive Halbwelle der Netzspannung gleichrichtet und
- daß die zweiten Anschlüsse (44 und 54) des Endstufengliedes (4) und des Steuergliedes (5) mit der ersten Anschlußklemme (1) des Außenleiters als Bezugspotential direkt verbunden sind.

2. Schaltanordnung nach Anspruch 1, dadurch gekennzeichnet, daß als erste Stromrichterschaltung zwischen der zweiten Anschlußklemme (2) für den Verbraucher und dem ersten Anschluß (43) des Endstufengliedes (4) eine erste Diode (12), die an ihrer Kathode mit der zweiten Anschlußklemme (2) in Verbindung steht, und zwischen der ersten Anschlußklemme (1) für den Außenleiter und dem ersten Anschluß (43) ein erster Speicherkondensator (8) angeordnet sind, die die negative Halbwelle der Netzspannung gleichrichten.

3. Schaltanordnung nach Anspruch 1, dadurch gekennzeichnet, daß als zweite Stromrichterschaltung zwischen der zweiten Anschlußklemme (2) für den Verbraucher und dem ersten Anschluß (53) des Steuergliedes (5) eine zweite Diode (13), die an ihrer Anode mit der zweiten Anschlußklemme (2) in Verbindung steht, und zwischen der ersten Anschlußklemme (1) für den Außenleiter und dem ersten Anschluß (53) ein zweiter Speicherkondensator (10) angeordnet sind, die die positive Halbwelle der Netzspannung gleichrichten.

4. Schaltanordnung nach den Ansprüchen 1 bis 3, dadurch gekennzeichnet, daß das Endstufenglied (4) und das Steuerglied (5) durch eine Transistorkopplung aus zwei Transistoren (6 und 7) in Basis-Schaltung verbunden sind, deren Basen mit der ersten Anschlußklemme (1) verbunden sind.

5. Schaltanordnung nach Anspruch 1, dadurch gekennzeichnet, daß als elektrischer Schalter (3) ein Triac die beiden Anschlußklemmen (1 und 2) überbrückt und ein Steuerausgang (45) des Endstufengliedes (4) mit dem Gate des Triacs in Verbindung steht.

6. Schaltanordnung nach den Ansprüchen 1 bis 3, dadurch gekennzeichnet, daß parallel zu den Speicherkondensatoren (8, 10) zur Spannungsbegrenzung Zenerdioden (9, 11) angeordnet sind.

**Claims**

1. Switching arrangement having a first connecting terminal (1) for an outer conductor of the supply system and a second connecting terminal (2) for a connecting conductor leading to the load, wherein the two connecting terminals (1 and 2) are bridged by an electrical switch (3) which is triggered by electronic elements (4, 5) which are connected to converter arrangements, characterised in that
- the electrical switch (3) is triggered by an output stage element (4), of which the first terminal connecting member (43) is connected to the two connecting terminals (1, 2) by way of a first converter arrangement which rectifies the negative half-cycle of the supply voltage,
- the output stage element (4) is connected to a control element (5), of which the first terminal connecting member (53) is connected to the two connecting terminals (1, 2) by way of a second converter arrangement which rectifies the positive half-cycle of the supply voltage, and
- the second terminal connecting members (44 and 54) of the output stage element (4) and of the control element (5) are directly connected to the first connecting terminal (1) of the outer conductor as reference potential.

2. Switching arrangement according to claim 1, characterised in that the first converter arrangement comprises a first diode (12) situated between the second connecting terminal (2) for the load and the first terminal connecting member (43) of the output stage element (4) and connected at its cathode to the second connecting terminal (2), and a first storage capacitor (8) situated between the first connecting terminal (1) for the outer conductor and the first terminal connecting member (43), the said first diode and the said first storage capacitor rectifying the negative half-cycle of the supply voltage.

3. Switching arrangement according to claim 1, characterized in that the second converter arrangement comprises a second diode (13) situated between the second connecting terminal (2) for the load and the first terminal connecting member (53) of the control element (5) and connected at its anode to the second connecting terminal (2), and a second storage capacitor (10) situated between the first connecting terminal (1) for the outer conductor and the first terminal connecting member (53), the said second diode and the said second storage capacitor rectifying the positive half-cycle of the supply voltage.

4. Switching arrangement according to claims 1 to 3, characterised in that the output stage element (4) and the control element (5) are connected by a transistor coupling consisting of two common-base transistors (6 and 7) whose bases are connected to the first connecting terminal (1).

5. Switching arrangement according to claim 1, characterised in that the electrical switch (3) consists of a triac which bridges the two connecting terminals (1 and 2) and a control output (45) of the output stage element (4) is connected to the gate of the triac.

6. Switching arrangement according to claims 1 to 3, characterised in that Zener diodes (9, 11) are disposed in parallel with the storage capacitors (8, 10) for the purpose of voltage limitation.


**Revendications**

1. Montage comportant une première borne de raccordement (1) pour un conducteur extérieur du réseau et une seconde borne de raccordement (2) pour une ligne de liaison aboutissant à l'appareil d'utilisation, un interrupteur électrique (3), qui est commandé par des circuits électroniques (4, 5) reliés à des circuits convertisseurs, shuntant les deux bornes de raccordement (1 et 2), caractérisé par le fait
- que l'interrupteur électrique (3) est commandé par un circuit formant étage final (4), dont la première borne (43) est reliée aux deux bornes de raccordement (1, 2) par l'intermédiaire d'un premier circuit convertisseur, qui redresse l'alternance négative de la tension du réseau,
- que le circuit formant étage final (4) est relié à un circuit de commande (5), dont la première borne (53) est reliée aux deux bornes de raccordement (1, 2) par l'intermédiaire d'un second circuit convertisseur, qui redresse l'alternance positive de la tension du réseau, et

- que les secondes bornes (44 et 54) du circuit formant étage final (4) et du circuit de commande (5) sont reliées directement à la première borne de raccordement (1) du conducteur extérieur, appliquant un potentiel de référence.

2. Montage suivant la revendication 1, caractérisé par le fait qu'il est prévu, pour constituer le premier circuit convertisseur, une première diode située entre la seconde borne de raccordement (2) pour l'appareil d'utilisation et la première borne (43) du circuit formant étage final (4) et reliée par sa cathode à la seconde borne de raccordement (2), et un premier condensateur de stockage (8), situé entre la première borne de raccordement (1) pour le conducteur extérieur et la première borne (43), la diode et le condensateur redressant l'alternance négative de la tension du réseau.

3. Montage suivant la revendication 1, caractérisé par le fait qu'il est prévu comme second circuit convertisseur, une seconde diode (13) située entre la seconde borne de raccordement (2) pour l'appareil d'utilisation et la première borne (53) du circuit de commande (5) et raccordée par son anode à la seconde borne de raccordement (2), et un second condensateur de stockage (10), situé entre la première borne de raccordement (1) pour le conducteur extérieur et la première borne (53), la diode et le condensateur redressant l'alternance positive de la tension du réseau.

4. Montage suivant les revendications 1 à 3, caractérisé par le fait que le circuit formant étage final (4) et le circuit de commande (5) sont reliés par un montage formé par un couplage à deux transistors 6 et 7 en base commune, dont les bases sont reliées à la première borne de raccordement (1).

5. Montage suivant la revendication 1, caractérisé par le fait qu'il est prévu comme interrupteur électrique (3), un triac, qui shunte les deux bornes de raccordement (1 et 2), et qu'une sortie de commande (45) du circuit formant étage final (4) est reliée à la grille du triac.

6. Montage suivant les revendications 1 à 3, caractérisé par le fait que des diodes Zener (9, 11) sont branchées en parallèle avec les condensateurs de stockage (8, 10) afin de limiter la tension.